# EUROPÄISCHE PATENTSCHRIFT

(11) **EP 1 476 816 B1**
(45) Veröffentlichungstag und Bekanntmachung des Hinweises auf die Patenterteilung: **27.07.2005**
(21) Anmeldenummer: 02798262.8
(22) Anmeldetag: 06.12.2002
(51) Int. Cl.: G06F 13/38, B60R 16/02, G01R 31/00, G01M 17/00

(54) **DATENBUS ZUR ELEKTRISCHEN ANSTEUERUNG BEI MODULAUFBAU**
DATA BUS FOR ELECTRICALLY CONTROLLING THE INSTALLATION OF MODULES
BUS DE DONNEES POUR LA COMMANDE ELECTRIQUE EN CAS DE CONSTRUCTION MODULAIRE

(30) Priorität: 15.02.2002 DE 10206239
(43) Veröffentlichungstag der Anmeldung: 17.11.2004
(73) Patentinhaber: ROBERT BOSCH GMBH, 70442 Stuttgart (DE)
(72) Erfinder: WEBER, Jens, 65779 Kelkheim-Fischbach (DE); FRITZ, Axel, 63322 Roedermark (DE)
(86) Internationale Anmeldenummer: PCT/DE2002/004471
(87) Internationale Veröffentlichungsnummer: WO 2003/069487

(56) Entgegenhaltungen:
- EP-A- 0 449 304
- EP-A- 0 778 179
- US-A- 5 467 272
- ISERNHAGEN R ET AL: "SIMULATION - SCHLUSSEL ZUM EINSATAZ EFFIZIENTE PLANUNG VON BUSSYSTEMEN IM AUTOMOBIL, 1. TIEL" ELEKTRONIK, FRANZIS VERLAG GMBH. MUNCHEN, DE, Bd. 43, Nr. 26, 27. Dezember 1994 (1994-12-27), Seiten 106-113, XP000491945 ISSN: 0013-5658
- MCCARTHY P ET AL: "OPTICAL INTERCONNECTIONS FOR AUTOMOTIVE NETWORK SYSTEMS" AUTO TECHNOLOGY, VIEWEG PUBLISHING, WIESBADEN, DE, Bd. 1, Nr. 2, April 2001 (2001-04), Seiten 64-67, XP001112021 ISSN: 1616-8216

## Beschreibung

### STAND DER TECHNIK

Die Erfindung betrifft eine Vorrichtung, insbesondere für ein Verkehrsmittel, mit mehreren aus Einzelkomponenten wie Steuergeräten, Sensoren und/oder Aktoren zusammengesetzten Modulen und einem Datenbus zur Ansteuerung und/oder Funktionsprüfung der Module, wobei die Module für deren unabhängige Funktionsprüfung vor der Montage mit einer Schnittstelle zur Funktionsprüfung und mit einem Stromversorgungsanschluss pro Modul versehen sind, die im Verkehrsmittel eingebauten Module mit dem Datenbus verbunden sind und über den Datenbus nach der Montage der Module im Verkehrsmittel eine On-Board-Diagnose durchführbar ist.

Komplexe Gesamtsysteme sind heute aus vielen Einzelkomponenten aufgebaut, die bei der Montage in vielen Einzelprozessen zusammengebaut werden müssen. Beim Montagevorgang der Einzelkomponenten, bspw. bei Verkehrsmitteln, treten vom Personal verursachte Fehler auf, die erst am Ende des Montageprozesses erkennbar sind und zu aufwendigen Rückbauaktionen am Ende des Montageprozesses führen.

EP-A-0449304 offenbart ein multiplexiertes Kommunikationssystem, für ein Fahrzeug, mit mehreren Netzknoten. Das system enthält Fehlerdetektions mittel.

US-546 7272 beschreibt ein integriertes Netz mit einem Diagnose-Modul.

Vor allem bei Kraftfahrzeugen wird die Montage aus Einzelkomponenten am Band zunehmend durch die Montage mit Modulen abgelöst. Jedes Modul bildet dabei ein Subsystem, das aus mehreren Einzelkomponenten besteht. Jedes Modul kann mehrere Sensoren, Aktoren, Steuergeräte und mechanische Komponenten aufweisen und bildet ein kompakte, am Band komplett montierbare Einheit. Zu derartigen Modulen gehören ein komplett bestücktes Fahrzeug-Cockpit, ein Front- oder ein Antriebsmodul für ein Verkehrsmittel. Bei der Montage des Gesamtsystems aus derartigen Modulen sind Montagefehler bereits bei der vorgezogenen, separaten Modulprüfung und dadurch wesentlich früher erkennbar, als bei der Montage der Einzelkomponenten und einer abschließenden Montageprüfung am Gesamtsystem.

Für eine standardisierte Prüftechnik und Fehlerdiagnose der Module ist der Einsatz eines einheitlichen elektrischen Modulzugangs erforderlich, der mittels Digitalsignalen eine differenzierte Auswertung der Module zulässt. Der einheitliche elektrische Modulzugang löst den ausstattungsindividuellen Kabelbaum aus separaten elektrischen Leitungen ab, der bei Variationen der Modulausstattungen bisher jeweils in anderer Ausstattung zu montieren war, was auch zu vielfältigen und aufwendigen Varianten bei der Prüftechnik führt.

Als einheitlicher elektrischer Modulzugang ist eine Schnittstelle zu einem Datenbus geeignet. Datenbussysteme sind heute zur elektrischen Kommunikation zwischen Steuergeräten im Fahrzeug im Einsatz. Je nach Fahrzeughersteller und Sicherheits- bzw. Übertragungsgeschwindigkeitsanforderungen sind bei der Antriebstechnik bspw. der CAN-Bus oder bei der Telematik ein D2B- oder MOST-Datenbus im Einsatz. Die Datenbussysteme variieren darüber hinaus noch zwischen den einzelnen Fahrzeugherstellern, so dass neben dem CAN- auch der LIN-Bus eingesetzt wird. Dadurch entsteht bei jedem Fahrzeughersteller eine große Typenvielfalt, die abhängig von der Fahrzeugausstattung ist. Deswegen ist der Kabelbaum mit auch das kostenintensivste Teil der Fahrzeug-Elektrik/-Elektronik.

In Fahrzeugen wird bisher der Kabelbaum mit den konventionellen elektrischen Leitungen, die bspw. Aktoren wie Bedienschalter eines Armaturenbretts ansteuern, und mit den Datenbussen durch einen sequentiellen, mechanischen Montageprozess im Fahrzeug zuerst verlegt und dann mit den Aktoren, Sensoren und Steuergeräten nacheinander verbunden. Bis zur vollständigen Montage aller Komponenten ist daher eine Funktionsprüfung der Subsysteme bzw. des Gesamtsystems naturgemäß nicht möglich.

### VORTEILE DER ERFINDUNG

Bei der erfindungsgemäßen Anordnung mit den Merkmalen des Anspruchs 1 ist der Datenbus mit einem Breitband-Sendemittel verbunden, welches Datenbusnachrichten verschiedener Datenbussysteme im Multiplexverfahren parallel auf den Datenbus aufschaltet, und jedes Modul weist einen Signalverteiler auf, der die komponentenspezifischen Signale für die Einzelkomponenten innerhalb des Moduls erzeugt.

Erfindungsgemäß ist erkannt worden, dass für eine standardisierte Prüftechnik bei der aus den Modulen aufgebauten Vorrichtung, eine einheitliche Ankopplung an einen Datenbus erforderlich ist, der die verschiedenen Datenbussignale, wie das CAN-, LIN-, MOST-Busprotokoll u.a., direkt übertragen kann. Innerhalb eines ersten Moduls ist beispielsweise dann ein erster interner MOST-Datenbus integriert, dessen Signale über die Schnittstelle des Moduls auf den breitbandigen Datenbus eingekoppelt werden. Der breitbandige Datenbus überträgt die eingekoppelten Signale an ein anderes Modul, das intern bspw. mit einem zweiten internen CAN-Datenbus ausgestattet ist. Im Signalverteiler können die MOST-Signale dann direkt in die Signale für die Einzelkomponenten zerlegt werden. Andererseits könnten die CAN-Signale per Multiplex-Verfahren, bspw. in einem anderen Frequenzband parallel zur ersten Datenübertragung der MOST-Signale an das erste Modul übertragen werden, um im dortigen Signalverteiler in die Signale für die Einzelkomponenten des ersten Moduls zerlegt zu werden.

Der breitbandige Datenbus ist mit den Modulen über eine einheitliche Schnittstelle verbunden. Die Schnittstelle jedes Moduls ermöglicht das direkte Einkoppeln der vom Modul kommenden Signale im Zeit- oder Frequenzmultiplexverfahren auf den breitbandigen Datenbus. Der Datenbus kann als optischer Datenbus, insbesondere mit einem faseroptischen Leiter, ausgeführt sein. Eine opto-elektrische Wandlung ist dann an jedem Modulzugang vorgesehen. Die gewandelten elektrischen Signale werden dann innerhalb des Moduls über einen Signal-Leistungsverteiler an die Einzelkomponenten weiterübertragen. Zum Beispiel können neben der eigentlichen Kommunikation auch Diagnosesignale für eine Einzelkomponente vorgesehen sein, wodurch dann die Einzelkomponente, bspw. ein Steuergerät, hinsichtlich dessen Funktionsfähigkeit überprüfbar ist.

Der Datenbus zwischen den Modulen ist bevorzugt ein breitbandiger optischer Datenbus mit hinreichender Sicherheitstechnik. Die Zuverlässigkeit des Datenbusses wird insbesondere durch eine Fehlererkennung und einen Notbetrieb gewährleistet. Der Datenbus ist deswegen als sogenanntes Backbone-Netzwerk mit ausfallsicherer Struktur vorgesehen. Der breitbandige Datenbus ist in der Lage, die unterschiedlichen Busprotokolle der verschiedenen Fahrzeughersteller, bspw. CAN, MOST u.a., auf einem einzigen Datenbus zu übertragen. Dabei kann der breitbandige Datenbus eine Übertragung ohne eigenes, zusätzliches Protokoll ermöglichen. In diesem Fall kann ein Signal eines internen Datenbusses innerhalb eines Moduls direkt auf den breitbandigen Datenbus mittels eines MultiplexVerfahrens eingekoppelt werden. Dabei wird beispielsweise ein höherfrequentes Bussignal eines MOST-Datenbusses in einem ersten Frequenzband übertragen und ein CAN-Signal kann in einem niederfrequenteren Frequenzband übertragen werden. Alternativ dazu können die Signale aber auch in einem Zeitmultiplexverfahren sequentiell über den Datenbus übertragen werden.

Alternativ zum optischen breitbandigen Datenbus kann auch ein elektrischer Datenbus verwendet werden. Dazu kann beispielsweise ein Ein- oder Zweidrahtbus eingesetzt werden, der eine Übertragung unterschiedlicher Signale im Multiplexverfahren zulässt. Verschiedene Datenformate mit unterschiedlichern Taktraten wie CAN-, LIN- oder MOST-Protokolle lassen sich auf dem protokollfreien breitbandigen Multiplex-Datenbus parallel übertragen. Die optische Lösung hat jedoch den Vorteil, dass keine EMV-Probleme auf dem Datenbus auftreten und Bauvolumen und die Kosten vergleichsweise gering sind. Ferner besitzt die Lösung mit einem optischen Datenbus ein geringeres Gewicht.

Bei einer Weiterbildung der Erfindung ist eine einheitliche Schnittstelle zwischen dem breitbandigen Datenbus und den Modulen vorgesehen, wodurch der Datenbus um zusätzliche mit der einheitlichen Schnittstelle versehene Module erweiterbar ist. Für eine standardisierte Prüftechnik ist dies von besonderem Vorteil, da der bisher bei Kraftfahrzeugen verwendete ausstattungsindividuelle Kabelbaum aus Einzelleitern am Modulzu- bzw. -abgang durch eine für alle Module einheitliche Schnittstelle zum breitbandigen Datenbus ersetzt ist. Neben der einheitlichen Schnittstelle verfügt jedes Modul lediglich noch über einen gemeinsamen Stromversorgungsanschluss. Die einheitliche Schnittstelle am Modul beschränkt die Variantenvielfalt der Modulverkabelung auf den Innenbereich der Module, d.h. der bisherige Kabelbaum wird im Wesentlichen vereinfacht und zwischen den Modulen durch ein ausstattungsneutrales, optisches Backbone-Netz ersetzt.

Die vorliegende Aufgabe wird auch durch ein Verfahren zur Funktionsprüfung der beschriebenen Vorrichtung gelöst. Das Verfahren ist zur Funktionsprüfung einer aus einzelnen Modulen aufgebauten Vorrichtung vorgesehen, bei der jedes Modul aus Einzelkomponenten wie Steuergeräten, Sensoren, Aktoren und mechanischen Komponenten zusammengesetzt ist und die Module über eine einheitliche Schnittstelle mit einem Datenbus vernetzt sind, wobei jedes Modul einzeln durch eine Diagnosesignal getestet wird. Das Diagnosesignal wird in einem Signalverteiler in für die Einzelkomponenten spezifische Signale aufgeteilt, die Module werden bei einer zweiten Funktionsprüfung über den Datenbus miteinander vernetzt und im Verbund getestet, wobei Diagnosesignale im Multiplexverfahren in verschiedenen Frequenzkanälen oder unterschiedlichen Zeitschlitzen über den Datenbus übertragen werden und diese Diagnosesignale bei der Übertragung das Datenbusprotokoll beibehalten, mit dem diese innerhalb der Module zu den Einzelkomponenten übertragen werden.

Mit dem erfindungsgemäßen Verfahren ist auch ein Test der montierten Module möglich, unabhängig von deren innerer Struktur, da die Datensignale innerhalb der Module direkt auf den breitbandigen Datenbus eingekoppelt werden, ohne dass diese in ein neues Datenbusprotokoll oder -format konvertiert werden müssen. Die Fehlererkennung bei der Datenübertragung kann dann erst innerhalb der Module abgeprüft werden, wodurch auf dem breitbandigen Datenbus die schon innerhalb der Module verwendeten Datenbusprotokolle weiterverwendet werden können.

Da bei dem erfindungsgemäßen Verfahren jedes Modul vor seiner Montage zunächst einzeln und dann im Verbund geprüft werden, kann schon sehr früh ein Fehler bei Einzelkomponenten innerhalb der Module erkannt werden, so dass ein Rückbau der einzelnen Module seltener vorkommt. Durch den erfindungsgemäßen breitbandigen Datenbus zwischen den Modulen kann auf den variantenreichen Kabelbaum zwischen den Modulen verzichtet werden.'Die einzelnen Module können dann bei unterschiedlichen Zulieferfirmen komplett gefertigt werden. Der Montageprozess im Werk wird vereinfacht, da jedes Modul nach dem Einzeltest unabhängig am Fahrzeugchassis montiert werden kann und der Gesamtest der Vorrichtung im montierten Zustand erfolgen kann, da bereits die Einzelfunktion jedes Moduls getestet wurde. Diese gestaffelte Funktionsprüfung ist im Wesentlichen unabhängig von der internen Struktur jedes Moduls.

Das Breitband-Sendemittel am Datenbus speist die unterschiedlichen Signale der einzelnen Module im Multiplexverfahren auf den breitbandigen Datenbus. Das Breitband-Sendemittel kann innerhalb jeder Modulschnittstelle vorgesehen sein oder beispielsweise nur ein- oder zweimal im System, um die Diagnosesignale in den verschiedene Datenformaten der Module, bspw. in unterschiedlichen Busprotokoll-Formaten, zu erzeugen.

Bei einer anderen Weiterbildung der Erfindung ist der optische Datenbus mit hinreichender Sicherheit dadurch vorgesehen, dass nach einer Fehlererkennung bei der Übertragung die Stromversorgung durch aufmodulieren des Datensignals als ein Signalersatzpfad verwendet wird. Nachdem ein Fehlermanagementsystem innerhalb der Module oder an den Schnittstellen des Datenbusses einen Fehler erkannt und lokalisiert hat, kann das zu übertragende Signal elektrisch als sogenanntes Powerline-Signal in die Stromversorgungsleitung des jeweiligen Moduls eingekoppelt werden und dann im Notbetrieb aus dem Stromversorgungssignal wieder demoduliert werden. Die hochfrequenten Datenbussignale werden dann aus dem Stromversorgungssignals mittels eines Bandpass oder eines anderen Filters wiedergewonnen und können an anderer Stelle wieder in den breitbandigen Datenbus oder ein Modul eingespeist werden.

### ZEICHNUNG

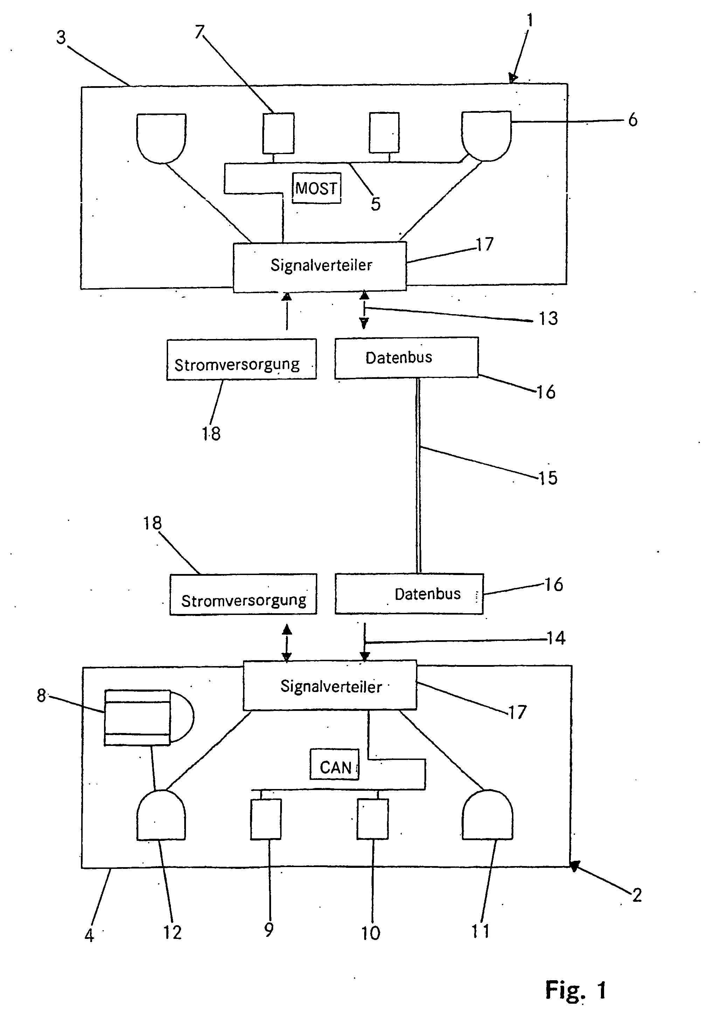

Ein Ausführungsbeispiel der Erfindung ist in der Zeichnung dargestellt und in der nachfolgenden Beschreibung erläutert. Die einzige Figur zeigt in schematischer Darstellung zwei mit dem breitbandigen Multiplex-Datenbus verbundene Module gemäß der vorliegenden Erfindung.

### BESCHREIBUNG DER AUSFÜHRUNGSBEISPIELE

Das Verkehrsmittel weist mehrere Module 1, 2 auf, wobei im Beispiel das Modul 1 ein komplettes Armaturenbrett 3 und das Modul 2 eine komplette Antriebseinheit 4 für ein Kraftfahrzeug umfassen. Das Armaturenbrett 3 bildet eine abgeschlossene Einheit mit einem internen MOST-Bus 5, an dem ein Sensor 6 zur Messung der Temperatur im Fahrzeuginnenraum und als Aktor ein Tachometer 7 zur Anzeige der momentan gefahrenen Geschwindigkeit angeordnet sind. Das Modul 2 weist als Antriebseinheit 4 einen Verbrennungsmotor 8 mit dem zugeordneten Steuergerät 9 zur Steuerung der Zündzeitpunkte, einem weiteren Steuergerät 10, einen Sensor 11 zur Messung der Brennraumdrücke und als Aktor ein Einheit 12 zur Erzeugung von Zündimpulsen auf. Die beiden Module 1, 2 weisen neben den beschriebenen Einzelkomponenten 5 - 12 noch weitere Einzelkomponenten auf, die hier jedoch nicht näher beschrieben werden. Jedes Modul 1, 2 weist mindestens eine einheitliche Schnittstelle 13 bzw. 14 zur Ankopplung eines breitbandigen Datenbusses 15 über ein Breitband-Sendemittel 16 und eine gemeinsame Stromversorgung 18 für das Modul 1, 2 auf. Die Signalverteiler 17 innerhalb jedes Moduls teilen das Signal dann in Einzelsignale für die Einzelkomponenten auf. Die Module 1, 2 sind beliebig komplexe Einheiten, die separat montiert, jeweils einzeln auf deren Funktionsfähigkeit geprüft und danach im Verkehrsmittel verbaut werden können.

Das Verkehrsmittel weist bei einer ersten Ausführungsform einen breitbandigen optischen Datenbus 15 auf, der mit der einheitlichen Schnittstelle 13 des Moduls 1 und mit der einheitlichen Schnittstelle 14 des Moduls 2 verbunden ist. Von dem breitbandigen optischen Datenbus 15 zu unterscheiden sind jeweils die innerhalb der Module 1, 2 vorgesehenen internen Datenbusse 5, die eine Kommunikation zwischen den Einzelkomponenten 5-12 des jeweiligen Moduls 1 oder 2 vorsehen. Die internen Datenbusse 5 verbinden insbesondere mehrere Steuergeräte 9, 10 innerhalb desselben Moduls 2.

Der breitbandige optische Datenbus 15 verbindet die einzelnen Module 1, 2 untereinander. Der optische Datenbus 15 ist bevorzugt ein faseroptischer Datenbus 15, der als sogenannter Backbone-Datenbus ausgestaltet ist. Dabei ist der Datenbus 15 über eine einheitliche Schnittstelle 13, 14 mit den Modulen 1, 2 gekoppelt und ohne größere Hardware-Veränderungen oder höheren Montageaufwand mit weiteren Modulen koppelbar. Der Datenbus 15 weist eine ausfallsichere Struktur auf, was insbesondere durch ein Fehlermanagementkonzept gewährleistet ist.

Der breitbandige Datenbus 15 stellt im Wesentlichen ein Übertragungsmedium dar, in das Busprotokoll-Nachrichten anderer Bustypen, wie bspw. das CAN-, D2B- oder MOST-Busprotokoll, aufgespielt werden können. Der Datenbus 15 benötigt dazu kein eigenes Busprotokoll, sondern es werden im Wesentlichen die innerhalb der Module 1, 2 erforderlichen Busprotokolle mit CAN-Protokoll-Nachrichten oder MOST-Protokoll-Nachrichten in den breitbandigen Datenbus 15 eingekoppelt. Der Datenbus 15 ist ein alle bisher bekannten asynchronen und synchronen Datenbus-Protokolle integrierendes breitbandiges Datenbussystem.

Der Datenbus 15 weist dazu ein Breitband-Sendemittel 16 auf, dass digitale Signale in den optischen Datenbus 15 breitbandig mittels eines Frequenz-Multiplexverfahrens einkoppeln kann. Dadurch können die durch das Breitband-Sendemittel 16 direkt auf den Datenbus 15 aufgeschalteten Signale im Multiplexverfahren parallel über den Datenbus 15 übertragen werden. Das Breitband-Sendemittel 16 ist vorgesehen, um die verschiedenen Datenbusprotokolle der Bussysteme der verschiedene Fahrzeughersteller auf dem Datenbus 15 ohne separates oder neues Busprotokoll zu integrieren.

Jedes Modul 1, 2 weist eine Schnittstelle 13, 14 auf, die jeweils mit einem Signalverteiler 17 ausgestattet ist. Dort erfolgt die opto-elektrische Wandlung, so dass das konvertierte Signal dann den Einzelkomponenten 5-12 der Module 1, 2 zugeführt werden kann. Der Signalverteiler 17 stellt folgende Funktionen bereit. Die Signale vom breitbandigen Datenbus 15 werden in Signale gewandelt, die zur Kommunikation mit den Einzelkomponenten 5-12 geeignet sind. Dazu gehört auch die Anpassung an neue Komponenten, bspw. bei Lieferantenwechsel. Der Signalverteiler 17 kann als Steuergerät ausgebildet sein und die Steuerung der Einzelkomponenten 5-12, die Signalüberwachung und Fehlerbehandlung innerhalb des Moduls 1, 2 vorsehen. Durch den Signalverteiler 17 wird die Erweiterung um Einzelkomponenten 5-12 oder Module 1, 2 ohne zusätzlichen Kabelbaum außerhalb der Module 1, 2 möglich. Es können auch nachträglich noch weiteres Steuergerät in ein Modul 1, 2 aufgenommen werden, ohne dass sich an der Hardware des breitbandigen Datenbusses 15 etwas ändert.

Das Breitband-Sendemittel 16 kann bei Bedarf auch in jeder Schnittstelle 13, 14 eines Moduls 1, 2 vorgesehen sein. Die Verkabelung jedes Moduls 1, 2 reduziert sich dadurch auf den Einsatz des breitbandigen Datenbusses 15 und eine Stromversorgung 18 für jedes Modul 1, 2. Dadurch sind im einfachsten Fall zwei Steckverbindung 13 und 18 bzw. 14 und 18 pro Modul 1, 2 erforderlich. Die Stromversorgung 18 ist als Ersatzsignalweg vorgesehen, wenn eine Unterbrechung oder ein elektrischer/optischer Kurzschluss auf dem Datenbus festgestellt wird. Dabei werden die Signale des gestörten Datenbusses auf die Leitungen der Stromversorgung 18 aufmoduliert und durch ein geeignetes Filter in einem Fehlerbehandlungsmodul rückgewonnen.

Bei dem erfindungsgemäßen Funktionsprüfungsverfahren kann jedes Modul durch externe Prüftechnik vor der Montage einzeln geprüft werden. Fehler und Ausfälle innerhalb der Module 1, 2 können dann schon vor deren Montage im Verkehrsmittel erkannt werden. Im eingebauten Zustand der Module 1, 2 bestehen dann zwei Möglichkeiten für die Funktionsprüfung. Die Prüfsoftware von externe Prüfgeräten wird ganz oder teilweise auf einem Zentralrechner im Fahrzeug geladen, der mit allen Modulen 1, 2 verbinden ist. Der Zentralrechner kann dann alle im Verkehrsmittel verbauten Module 1, 2 einzeln On-board prüfen.

Bei einem anderen Funktionsprüfungsverfahren verfügt jedes Verkehrsmittel über ein Kommunikationsmittel für einen Werkstatt-Test, bspw. ein optisches Koppelfeld, wobei über ein externes Prüfgerät jedes Modul im Fahrzeug geprüft werden kann. Üblicherweise wird durch den Zentralrechner im Fahrzeug ein Funktionstest des Gesamtsystems durchgeführt.

## Patentansprüche

1. Vorrichtung, insbesondere für ein Verkehrsmittel, mit mehreren aus Einzelkomponenten (5 - 12) wie Steuergeräten (9, 10), Sensoren (6, 11), Aktoren (7, 8) und/oder weiteren mechanischen Komponenten zusammengesetzten Modulen (1, 2) und einem Datenbus (15) zur Ansteuerung und/oder Funktionsprüfung der Module (1, 2), und einem Breitband-Sendemittel (16) wobei die Module (1, 2) für deren unabhängige Funktionsprüfung vor der Montage mit einer Schnittstelle (13, 14) zur Funktionsprüfung und mit einem Stromversorgungsanschluss (18) pro Modul (1, 2) versehen sind, die im Verkehrsmittel einbaubaren Module (1, 2) mit dem Datenbus (15) verbunden sind und über den Datenbus (15) nach der Montage der Module (1, 2) im Verkehrsmittel eine On-Board-Diagnose durchführbar ist, **dadurch gekennzeichnet, dass** der Datenbus (15) mit dem Breitband-Sendemittel (16) verbunden ist, welches Datenbusnachrichten verschiedener Datenbussysteme im Multiplexverfahren parallel auf den Datenbus (15) aufschaltet, und dass jedes Modul (1, 2) einen Signalverteiler (17) aufweist, der die komponentenspezifischen Signale für die Einzelkomponenten (5 - 12) innerhalb des Moduls (1, 2) erzeugt.

2. Vorrichtung nach Anspruch 1, **dadurch gekennzeichnet, dass** der Datenbus (15) ein optischer Datenbus ist, wobei die optischen Signale durch den Signalverteiler (17) in jedem Modul (1, 2) in komponentenspezifische elektrische Signale gewandelt werden.

3. Vorrichtung nach Anspruch 1 oder 2, **dadurch gekennzeichnet, dass** in dem Modul (1, 2) ein Signalverteiler (17) vorgesehen ist, der die Datenbussignale vom Datenbus (15) in Signale für einen internen Datenbus konvertiert.

4. Vorrichtung nach einem der Ansprüche 1 bis 3, **dadurch gekennzeichnet, dass** der Datenbus (15) im Multiplex-Verfahren Signale unterschiedlicher Datenbus-Datenprotokolle durch direktes Einkoppeln überträgt, so dass im Modul (1 oder 2) eines der Datenbus-Datenprotokolle auf dem internen Datenbus des Moduls (1 oder 2) weiterübertragbar ist.

5. Vorrichtung nach einem der Ansprüche 1 bis 4, **dadurch gekennzeichnet, dass** die Leitungen der Stromversorgung (18) jedes Moduls (1, 2) als Signalersatzpfad vorgesehen ist, über den bei Übertragungsfehlern auf dem Datenbus (15) die Übertragung durchführbar ist.

6. Vorrichtung nach Anspruch 1, **dadurch gekennzeichnet, dass** jedes Modul (1, 2) beim Einbau in das Verkehrsmittel als Einheit komplett montierbar ist und das Modul (1, 2) einen Anschluss für eine gemeinsame Stromversorgung (18) der Einzelkomponenten (5 - 12) und eine einheitliche Schnittstelle (13 bzw. 14) für den Datenbus (15) aufweist.

7. Vorrichtung nach einem der Ansprüche 1 bis 6, **dadurch gekennzeichnet, dass** der Signalverteiler (17) eine Anpassung bei der Signalkonvertierung vorsieht, wenn innerhalb des Moduls (1 oder 2) neue Einzelkomponenten (5 - 12) hinzugefügt werden, ohne dass dabei die Verkabelung (15) zwischen den Modulen (1, 2) geändert werden muss.

8. Verfahren zur Funktionsprüfung einer aus einzelnen Modulen (1, 2) aufgebauten Vorrichtung, bei der jedes Modul (1, 2) aus Einzelkomponenten (5 - 12) wie Steuergeräten (9, 10), Sensoren (6, 11), Aktoren (7, 8) und mechanischen Komponenten zusammengesetzt ist und die Module (1, 2) über eine einheitliche Schnittstelle (13, 14) mit einem Datenbus (15) vernetzt sind, wobei jedes Modul (1, 2) einzeln durch eine Diagnosesignal getestet wird, **dadurch gekennzeichnet, dass** das Diagnosesignal in einem Signalverteiler (17) in für die Einzelkomponenten (5 - 12) spezifische Signale aufgeteilt wird, die Module (1, 2) bei einer zweiten Funktionsprüfung über den Datenbus (15) miteinander vernetzt werden und im Verbund getestet werden, wobei Diagnosesignale im Multiplexverfahren in verschiedenen Frequenzkanälen oder unterschiedlichen Zeitschlitzen über den Datenbus (15) übertragen werden und diese Diagnosesignale bei der Übertragung das Datenbusprotokoll beibehalten, mit dem diese innerhalb der Module (1, 2) zu den Einzelkomponenten (5 - 12) übertragen werden.

9. Verfahren nach Anspruch 8, **dadurch gekennzeichnet, dass** eine Einzelprüfung vor der Montage der Module (1, 2) in einem Verkehrsmittel erfolgt und nach dem Einbau aller Module (1, 2) eine On-board-Diagnose im fahrfertigen Verkehrsmittel durchgeführt wird.

10. Verfahren nach einem der Ansprüche 8 oder 9, **dadurch gekennzeichnet, dass** auf dem Datenbus (15) im Multiplexverfahren ein erstes Diagnosesignal in einem ersten Datenformat und ein zweites Diagnosesignal in einem anderen Datenformat eingekoppelt wird.

## Claims

1. Device, in particular for a means of transportation, having a plurality of modules (1, 2) which are composed of individual components (5 - 12) such as control devices (9, 10), sensors (6, 11), actuators (7, 8) and/or further mechanical components, and a data bus (15) for actuating and/or functionally testing the modules (1, 2), and a broadband transmitting means (16), wherein the modules (1, 2) are provided, for their independent functional testing before mounting, with an interface (13, 14) for functional testing and with one power supply connection (18) per module (1, 2), the modules (1, 2) which can be installed in the means of transportation are connected to the data bus (15) and on-board diagnostics can be carried out in the means of transportation using the data bus (15) after the mounting of the modules (1, 2), **characterized in that** the data bus (15) is connected to the broadband transmitting means (16) which connects data bus messages from various data bus systems to the data bus (15) in parallel using the multiplex method, and **in that** each module (1, 2) has a signal distributor (17) which generates the component-specific signals for the individual components (5 - 12) within the module (1, 2).

2. Device according to Claim 1, **characterized in that** the data bus (15) is an optical data bus, wherein the optical signals are converted into component-specific electrical signals by the signal distributor (17) in each module (1, 2).

3. Device according to Claim 1 or 2, **characterized in that** a signal distributor (17) which converts the data bus signals from the data bus (15) into signals for an internal data bus is provided in the module (1, 2).

4. Device according to one of Claims 1 to 3, **characterized in that** the data bus (15) transmits signals with different data bus data protocols by directly feeding them in using the multiplex method so that, in the module (1 or 2), one of the data bus data protocols can be transmitted further on the internal data bus of the module (1 or 2).

5. Device according to one of Claims 1 to 4, **characterized in that** the lines of the power supply (18) of each module (1, 2) are provided as a signal backup path via which the transmission can be carried out in the event of transmission faults on the data bus (15).

6. Device according to Claim 1, **characterized in that** when each module (1, 2) is installed in the means of transportation as a unit it can be mounted in the complete state and the module (1, 2) has a connection for a common power supply (18) of the individual component (5 - 12) and a uniform interface (13 or 14) for the data bus (15).

7. Device according to one of Claims 1 to 6, **characterized in that** the signal distributor (17) provides adaptation during the conversion of signals if new individual components (5 - 12) are added within the module (1 or 2) without the cabling (15) between the modules (1, 2) having to be changed in the process.

8. Method for functionally testing a device which is made up of individual modules (1, 2), in which each module (1, 2) is composed of individual components (5 - 12) such as control devices (9, 10), sensors (6, 11), actuators (7, 8) and mechanical components, and the modules (1, 2) are interconnected by means of a data bus (15) via a uniform interface (13, 14), wherein each module (1, 2) is tested individually by means of a diagnostic signal, **characterized in that** the diagnostic signal is split in a signal distributor (17) into signals which are specific to the individual components (5 - 12), the modules (1, 2) are interconnected to one another via the data bus (15) during a second functional test and are tested together, wherein diagnostic signals are transmitted in various frequency channels or different time slots via the data bus (15) using the multiplex method, and during the transmission these diagnostic signals retain the data bus protocol with which they are transmitted to the individual components (5 - 12) within the modules (1, 2).

9. Method according to Claim 8, **characterized in that** individual testing is carried out before the modules (1, 2) are mounted in a means of transportation, and after all the modules (1, 2) have been installed on-board diagnostics are carried out in the means of transportation which is ready to drive.

10. Method according to one of Claims 8 or 9, **characterized in that**, using the multiplex method, a first diagnostic signal is fed into the data bus (15) with a first data format, and a second diagnostic signal is fed into the data bus (15) with a different data format.

## Revendications

1. Dispositif, notamment pour un moyen de trafic, comprenant plusieurs modules (1-2) composés à partir de composants individuels (5-12) comme des appareils de commande (9, 10), des capteurs (6, 11), des actionneurs (7, 8) et/ou d'autres composants mécaniques, un bus de données (15) pour l'excitation et/ou le contrôle de fonctionnement des modules (1, 2), et un moyen émetteur à bande large (16), les modules (1, 2) étant, pour leur contrôle indépendant de fonctionnement avant le montage, équipés d'une interface (13, 14) pour le contrôle de fonctionnement et d'un raccord d'alimentation en courant (18) par module (1, 2), les modules (1, 2) montés dans le moyen de trafic étant reliés au bus de données (15) pour effectuer un diagnostic embarqué à l'aide du bus de données (15) après le montage des modules (1, 2) dans le moyen de trafic,
**caractérisé en ce que**
le bus de données (15) est relié au moyen émetteur à bande large (16) qui commute des informations de bus de données de différents systèmes de bus de données dans un procédé de multiplexage parallèlement au bus de données (15), et chaque module (1, 2) présente un distributeur de signal (17) qui génère les signaux spécifiques aux composants pour les composants individuels (5 - 12) dans le module (1, 2).

2. Dispositif selon la revendication 1,
**caractérisé en ce que**
le bus de données (15) est un bus de données optique, les signaux optiques étant convertis par le distributeur de signal (17) en signaux électriques spécifiques aux composants dans chaque module (1, 2).

3. Dispositif selon la revendication 1 ou 2,
**caractérisé en ce que**
dans le module (1, 2) un distributeur de signal (17) convertit les signaux de bus de données du bus de données (15) en signaux pour un bus de données interne.

4. Dispositif selon l'une quelconque des revendications 1 à 3,
**caractérisé en ce que**
dans le procédé de multiplexage le bus de données (15) transmet des signaux de différents protocoles de données de bus de données par un couplage direct, de sorte que l'un des protocoles de données du bus de données peut être transmis au bus de données interne du module (1 ou 2) dans le module (1 ou 2).

5. Dispositif selon l'une quelconque des revendications 1 à 4,
**caractérisé en ce que**
les lignes d'alimentation en courant (18) de chaque module (1, 2) sont prévues en tant que voie de remplacement des signaux qui réalise la transmission sur le bus de données (15) en cas d'erreurs de transmission.

6. Dispositif selon la revendication 1,
**caractérisé en ce que**
chaque module (1, 2) peut être monté complètement en tant qu'unité lors de l'intégration dans le moyen de trafic, et le module (1, 2) présente un raccordement pour une alimentation commune de courant (18) des composants individuels (5 - 12) et une interface uniforme (13 et/ou 14) pour le bus de données (15).

7. Dispositif selon l'une quelconque des revendications 1 à 6,
**caractérisé en ce que**
le distributeur de signal (17) prévoit une adaptation lors de la conversion des signaux si de nouveaux composants individuels (5 - 12) sont ajoutés dans le module (1 ou 2) sans que le câblage (15) doive être modifié entre les modules (1, 2).

8. Procédé de contrôle de fonctionnement d'un dispositif monté à partir de différents modules (1, 2), dans lequel chaque module (1, 2) est composé de composants individuels (5 - 12) comme des appareils de commande (9, 10), des capteurs (6, 11), des actionneurs (7, 8) et des composants mécaniques, et les modules (1, 2) sont mis en réseau avec un bus de données (15) via une interface uniforme (13, 14), chaque module (1, 2) étant testé individuellement par un signal de diagnostic,
**caractérisé en ce que**
le signal de diagnostic est réparti par un distributeur de signal (17) en signaux spécifiques pour les composants individuels (5 - 12), les modules (1, 2) sont mis en réseau les uns avec les autres via le bus de données (15) dans un deuxième contrôle de fonctionnement et testés en groupe, des signaux de diagnostic étant transmis dans le procédé de multiplexage dans différents canaux de fréquences ou dans différents intervalles de temps via le bus de données (15) et ces signaux de diagnostic conservant lors de la transmission le protocole de bus de données avec lequel ils sont transmis à l'intérieur des modules (1, 2) vers les composants individuels (5 - 12).

9. Procédé selon la revendication 8,
**caractérisé en ce qu'**
un contrôle individuel avant le montage des modules (1, 2) est effectué dans un moyen de trafic et un diagnostic embarqué est réalisé dans le moyen de trafic prêt à partir après le montage de tous les modules (1, 2).

10. Procédé selon l'une quelconque des revendications 8 ou 9,
**caractérisé en ce qu'**
un premier signal de diagnostic est couplé sur le bus de données (15) dans le procédé de multiplexage dans un premier format de données, et un deuxième signal de diagnostic est couplé dans un autre format de données.
